(19) Europäisches Patentamt / European Patent Office / Office européen des brevets

(11) **EP 4 167 151 A1**

(12) **EUROPEAN PATENT APPLICATION**
published in accordance with Art. 153(4) EPC

(43) Date of publication:
**19.04.2023 Bulletin 2023/16**

(21) Application number: **21824907.6**

(22) Date of filing: **29.03.2021**

(51) International Patent Classification (IPC):
**G06N 99/00** (2019.01)

(52) Cooperative Patent Classification (CPC):
**G06N 99/00**

(86) International application number:
**PCT/JP2021/013273**

(87) International publication number:
**WO 2021/256046 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.06.2020  JP 2020103540
25.12.2020  JP 2020216152**

(71) Applicant: **JIJ Inc.
Tokyo 113-0031 (JP)**

(72) Inventor: **YAMASHIRO Yu
Tokyo 113-0031 (JP)**

(74) Representative: **AWA Sweden AB
Junkersgatan 1
582 35 Linköping (SE)**

(54) **METHOD, DATA STRUCTURE, AND PROGRAM**

(57)     [Problem] To reduce the load or time required to solve an optimization problem.

[Solution] A method according to the present disclosure is a method for converting a mathematical optimization problem into an object program for a mathematical programming problem, wherein a processor stores, in an object, information on each of components from deblocking of a mathematical expression representing a mathematical model corresponding to a mathematical optimization problem, and holds objects in association with each other through a connecting node as a tree structure in which an object corresponding to the mathematical model is taken as a root node and an object pertaining to each component from the deblocked mathematical expression is taken as a leaf node.

FIG. 3

**Description**

FIELD

The present disclosure relates to a method, a data structure, and a program.

BACKGROUND

A quantum annealing approach has attracted attention as an approach for solving so-called optimization problems. For example, Patent Literature 1 listed below discloses a processing method for performing quantum annealing calculation.

CITATION LIST

PATENT LITERATURE

Patent Literature 1: Japanese Translation of PCT International Application Publication No. 2019-513276

SUMMARY

TECHNICAL PROBLEM

When solving a mathematical model corresponding to an optimization problem in an annealing machine or the like, a technique has been used to convert the mathematical model into a so-called binary optimization problem model and search for its parameters. However, in the conversion into such a model, the mathematical model is completely serialized and compiled, which may result in a lengthy load and time for solving a series of optimization problems, depending on the size of an indicator of an optimization target.

The present disclosure has been made in view of the above problem, and an object of the present disclosure is to provide a method, a data structure, and a program that are capable of reducing the load and time required to solve the optimization problem.

SOLUTION TO PROBLEM

The present disclosure provides a method for converting a mathematical optimization problem into an object program for a mathematical programming problem, the method comprising causing a processor to: acquire information on a mathematical expression representing a mathematical model corresponding to the mathematical optimization problem; deblock the mathematical expression into components and store information on each component in an object, the components constituting the mathematical expression; and for the components of the mathematical expression, associate objects with each other through a connecting node as a data structure that is a tree structure in which an object corresponding to the mathematical model is taken as a root node and an object pertaining to each component from the deblocked mathematical expression is taken as a leaf node.

The present disclosure also provides a data structure to be subjected to processing for converting a mathematical optimization problem into an object program for a mathematical programming problem by a computer, wherein information on each of components from deblocking of a mathematical expression representing a mathematical model corresponding to the mathematical optimization problem is stored in an object, and objects are associated with each other through a connecting node as a tree structure in which an object corresponding to the mathematical model is taken as a root node and an object pertaining to each component from the deblocked mathematical expression is taken as a leaf node.

The present disclosure also provides a program for subjecting a computer to processing for converting a mathematical optimization problem into an object program for a mathematical programming problem, the program being configured to cause the computer to function as: an acquisition unit that acquires information on a mathematical expression representing a mathematical model corresponding to the mathematical optimization problem; an object storage unit that deblocks the mathematical expression into components and stores information on each component in an object, the components constituting the mathematical expression; and a data processing unit that associates, for the components of the mathematical expression, objects with each other through a connecting node as a data structure that is a tree structure in which an object corresponding to the mathematical model is taken as a root node and an object pertaining to each component from the deblocked mathematical expression is taken as a leaf node.

ADVANTAGEOUS EFFECTS OF INVENTION

According to the present disclosure, it is possible to reduce the load and time required to solve the optimization problem.

BRIEF DESCRIPTION OF THE DRAWINGS

FIG. 1 is a diagram illustrating an example configuration of a system 1 according to an embodiment of the present disclosure.

FIG. 2 is a diagram illustrating an example hardware configuration of a computer that realizes a data processing server 10 according to the embodiment.

FIG. 3 is a diagram illustrating an example software configuration of the data processing server 10 according to the embodiment.

FIG. 4 is a diagram illustrating an example deblocking into components that are to be stored in their respective objects in an object storage unit 113 according to the embodiment.

FIG. 5 is a diagram illustrating an example process of constructing a tree structure T1 by a data processing unit 114 according to the embodiment.

FIG. 6 is a flowchart for a course of control in the system 1 according to the embodiment.

FIG. 7 is a diagram illustrating an example software configuration of a data processing server 10' according to another embodiment.

FIG. 8 is a diagram illustrating an example process of constructing a tree structure T2 by a data processing unit 1014 according to the embodiment.

FIG. 9 is a diagram illustrating an example process of converting the tree structure T2 into a tree structure T3 by a first conversion unit 1015 according to the embodiment.

FIG. 10 is a flowchart for a course of control in a system 1' according to the embodiment.

DETAILED DESCRIPTION

Hereinafter, preferable embodiments of the present disclosure will be described in detail with reference to accompanying drawings. Note that, in the present specification and the drawings, constituent elements that have substantially the same function and structure are denoted with the same reference signs, thereby omitting repetitive descriptions of these constituent elements.

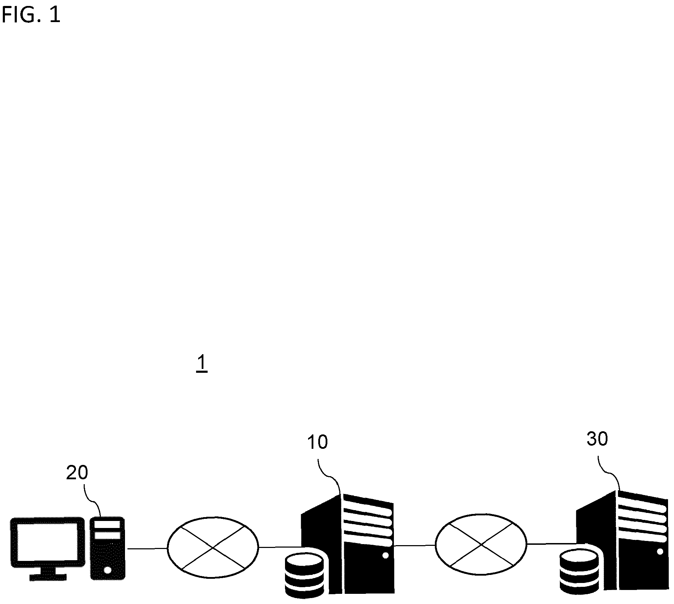

FIG. 1 is a diagram illustrating an example configuration of a system 1 according to an embodiment of the present disclosure. As illustrated, the system 1 according to the present embodiment includes a data processing server 10, a terminal 20, and an analysis server 30. The data processing server 10, the terminal 20, and the analysis server 30 are communicatively connected to each other via a network NW. Note that this configuration is an example, and a certain configuration may be combined with another configuration or may include another configuration.

In the present embodiment, the network NW is assumed to be the Internet. The network NW is constructed by, for example, a public telephone network, a mobile phone network, a wireless communication network, Ethernet (registered trademark), or the like.

The data processing server 10 is, for example, a computer for converting (compiling) a mathematical model corresponding to an optimization problem into an object program for a binary optimization problem. The data processing server 10 may be, for example, a general-purpose computer such as a workstation or a personal computer or may be logically realized by cloud computing.

The terminal 20 is, for example, a terminal used when inputting a mathematical expression corresponding to a mathematical model. For example, the terminal 20 may be a mobile phone, a smartphone, a tablet computer, a personal computer, or the like. The terminal 20 is an example of a user terminal

The analysis server 30 is, for example, a server that executes the object program from the conversion to perform an analysis to search for an optimal parameter in the optimization problem. The analysis server 30 may be, for example, a typical server for analysis, or may be at least any one of a simulated annealing machine, a quantum annealing machine, and a quantum gate computer.

An overview of the system 1 according to the present embodiment will be described. When a mathematical model of an optimization problem is solved as a mathematical programming problem such as a binarized optimization problem, it is necessary to solve an expression corresponding to the mathematical programming problem in the analysis server 30. For example, when a mathematical programming problem that is a binary optimization problem is solved by mapping a mathematical model to an unconstrained quadratic binary optimization problem (QUBO), a formulation in modeling of the QUBO may cause a constraint term based on a penalty method, a Lagrangian undetermined multiplier, or the like to be added to a cost function. Solving these formulas by a conventional method would require a complete expansion of the mathematical expression, which thus leads to an error in the calculation or an increase in development cost.

Therefore, for example, a technique has been developed to describe the mathematical model in a programming language or the like and convert it into a QUBO object. In such a technique, however, information about all the aforementioned terms is converted with the summation operator $\Sigma$ or the like expanded, and thus, the time required for the conversion depends on the data size. Therefore, it may take a long time to solve the optimization problem.

According to the system 1 of the present embodiment, a mathematical expression corresponding to a mathematical model is deblocked into components, the components are stored as their respective objects, and such objects can be held as a tree structure. In each object, information such as an operator or a variable of the mathematical expression is stored as it is. The objects can be held in the tree structure in which an object storing information representing the mathematical model is taken as a root node and an object storing information on each component is taken as a leaf node with the objects connected through a connecting node

Having the objects storing the information on the components in such a tree structure allows the conversion into the object program with the relationship between the components of the mathematical expression maintained. This eliminates the need for expanding components enclosed in a summation operator for each term, which in turn obviates the need for increasing the size of the object program obtained from the conversion.

As for an indicator for solving the optimization problem among the components, in particular, by taking the object as a placeholder and holding the indicator as separate data, an increase in the load on the conversion into the object program can be avoided independently of the size of the indicator.

Further, when a user solves the optimization problem using the terminal 20, the user can generate the data structure of the above tree structure merely by inputting the information on the mathematical expression corresponding to the mathematical model to the terminal 20, automatically obtain the object program for solving the optimization problem to solve the optimization problem. Note that the present embodiment is based on the premise that the mathematical optimization problem upon converted into a binary optimization problem is solved; however, the present technique is not limited to such an example. For example, the system 1 according to the present embodiment can convert the mathematical optimization problem to solve not only into the binary optimization problem but also into a mathematical programming problem such as a linear programming problem, a mixed-integer programming problem, and a quadratic programming problem. The mathematical programming problem as used herein refers to, for example, a mathematical programming problem that can be interpreted by an algorithm or hardware to deal with the problem.

Hereinafter, the present embodiment will be described in detail.

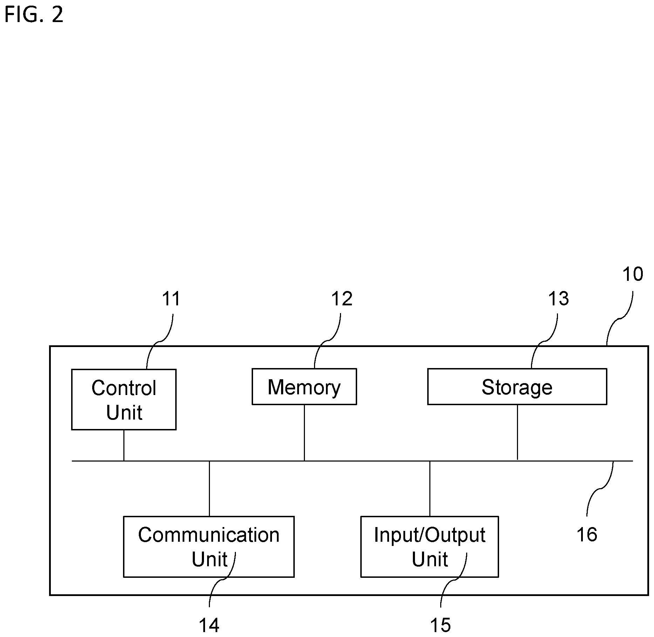

FIG. 2 is a diagram illustrating an example hardware configuration of a computer that realizes the data processing server 10 according to the present embodiment. The data processing server 10 includes at least a control unit 11, a memory 12, a storage 13, a communication unit 14, and an input/output unit 15 or the like. These are electrically connected to each other via a bus 16.

The control unit 11 is an arithmetical unit that controls the overall operation of the data processing server 10, controls transmission and reception of data between components, and performs information processing or the like necessary for execution of an application and authentication. For example, the control unit 11 is a processor such as a central processing unit (CPU) and executes a program or the like that is stored in the storage 13 and expanded in the memory 12, thereby performing each information processing.

The memory 12 includes a main memory constituted by a volatile memory such as a dynamic random access memory (DRAM) and an auxiliary storage constituted by a nonvolatile storage such as a flash memory or a hard disc drive (HDD). The memory 12 is used as a work area or the like of the control unit 11 and stores a basic input/output system (BIOS) executed in the activation of the data processing server 10 as well as various setting information or the like.

The storage 13 stores various programs such as an application program. A database storing data used in each processing may be constructed in the storage 13.

The communication unit 14 connects the data processing server 10 to a network. The communication unit 14 communicates with an external device directly or via a network access point by a scheme such as a wired local area network (LAN), a wireless LAN, Wi-Fi (Wireless Fidelity, registered trademark), infrared communication, Bluetooth (registered trademark), near field communication, or contactless communication.

The input/output unit 15 is, for example, an information input device, such as a keyboard, a mouse, or a touch panel, and an output device, such as a display.

The bus 16 is commonly connected to the above-described components, and transmits, for example, an address signal, a data signal, and various control signals.

A terminal such as a computer or a smartphone that realizes the terminal 20 and the analysis server 30 according to the present embodiment has the same hardware configuration as the example hardware configuration of the data processing server 10 illustrated in FIG. 2, and thus description thereof is omitted.

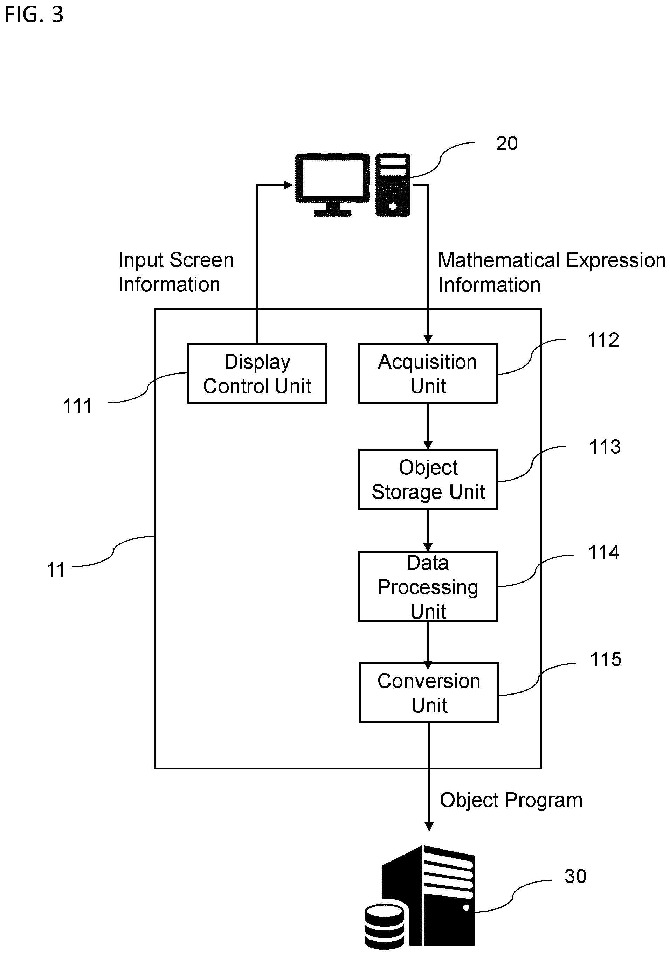

FIG. 3 is a diagram illustrating an example software configuration of the data processing server 10 according to the present embodiment. The control unit 11 of the data processing server 10 includes a display control unit 111, an acquisition unit 112, an object storage unit 113, a data processing unit 114, and a conversion unit 115.

The display control unit 111 has a function of controlling display on the terminal 20 for allowing inputting of a mathematical expression representing a mathematical model. For example, the display control unit 111 may cause a form for inputting a mathematical expression to be displayed on a screen of the terminal 20. Such a form may be free-form or may be in a format that allows inputting of a choice made among predetermined alternatives or the like. In addition, the display control unit 111 may display, on the screen of the terminal 20, an interface for reading a file or the like that specifies the mathematical expression for the mathematical model. As described above, an object displayed in order to allow inputting of the mathematical expression for the mathematical model, or a format or the like used in inputting the mathematical expression is not particularly limited.

The acquisition unit 112 has a function of acquiring information on a mathematical expression representing a mathematical model. For example, the acquisition unit 112 according to the present embodiment may acquire information on a mathematical expression input to the terminal 20. When information on a mathematical expression is input to any storage or the like in advance, the acquisition unit 112 may acquire the information from the storage or the like. Processing by the acquisition unit 112 may be initiated, for example, in response to an instruction based on the operation of a user who has input a mathematical expression to the terminal 20. Specifically, when the user who has input the mathematical expression to the terminal 20 operates an object for initiating the processing upon completion of the input operation, the acquisition unit 112 may acquire information on the mathematical expression from the terminal 20.

Note that the information on the mathematical expression may include, for example, information on a structure of the mathematical expression representing the optimization problem and a component in the structure. In the present embodiment, as an example mathematical expression is used a mathematical expression for a cost function corresponding to a mathematical model as in mathematical expression (1) below. In this case, the left side is referred to as a cost function, the first term on the right side is referred to as a cost term, and the second term on the right side is referred to as a constraint term. A target mathematical model may be a mathematical model corresponding to an optimization problem such as the traveling salesman problem. In addition, a binary optimization problem corresponding to the mathematical model includes, for example, at least any one of a QUBO (quadratic unconstrained binary optimization problem), a PUBO (polynomial unconstrained binary optimization problem), a HUBO (high-order unconstrained binary optimization problem), and a constrained binary optimization problem. Mathematical expression (1) below is a mathematical expression corresponding to a QUBO. Which binary optimization problem to employ is determined as appropriate according to, for example, the architect of hardware for solving the problem or an algorithm for solving the problem.

[Expression 1]

$$E = \sum_{t} \sum_{i,j} d_{i,j} q_{i,t} q_{i,t+1} + \lambda \sum_{t} \left( \sum_{i} q_{i,t} - 1 \right)^{2} \quad \cdot \cdot \cdot (1)$$

The object storage unit 113 has a function of deblocking the acquired mathematical expression into components, which constitute the mathematical expression, and storing information on each component from the deblocking in an object. The term "component" as used herein may at least include an operator, a variable, a literal expression, an exponent portion, a coefficient, and a constant of a mathematical expression, for example. The operator is, for example, a summation operator such as $\Sigma$ or parentheses.

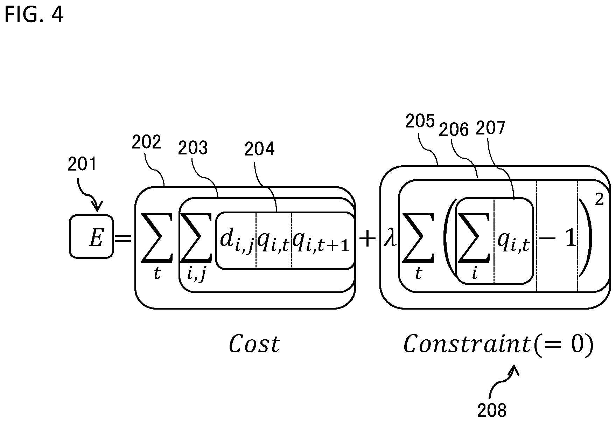

FIG. 4 is a diagram illustrating an example deblocking into components that are to be stored in their respective objects in the object storage unit 113 according to the present embodiment. As shown in FIG. 4, for example, the mathematical expression may be deblocked into a component 201 for the cost function E, a component 202 for $\Sigma t$, a component 203 for $\Sigma ij$, a component 204 for a literal expression and variables, a component 205 for $\lambda$, a component 206 for a term included in $\Sigma t$, and a component 207 for a term included in $\Sigma i$. Further, as indicated by the dashed lines in FIG. 4, the components 204, 206, and 207 may be further deblocked by the variable, the constant, the literal expression, and the exponent. As such, the mathematical expression is deblocked into components as described above, and each of the components is stored in a single object. At this time, information to be stored in the object is information such as an operator or variable itself shown in the mathematical expression. In addition, as for the operator (e.g., $\Sigma$), information on a subscript may also be stored as meta information. This attains a data structure that is a tree structure, which will be described later, with the relationship with a subscript of a literal expression or the like stored in another object maintained. That is, the information on the operator can be held as an object without expanding the term of the operator.

In addition, information on the constraint condition 208 in the constraint term of the mathematical expression, of which details will be described later, can also be stored as an object as described above. By storing the information on such a constraint condition in the object, it is possible to deal with various constraint conditions in solving the optimization problem. Thus, the information on the subscript of the operator or on the constraint condition is referred to as meta information in the present specification. The meta information may define a relationship between leaf nodes. In addition, the constraint condition in the present embodiment is not limited to a condition pertaining to an equality constraint and may be a condition pertaining to an inequality constraint. The tree structure presented below allows abstraction and objectization even under such a constraint condition and thus makes it possible to solve optimization problems under various constraint conditions.

The data processing unit 114 has a function of constructing a data structure that is a tree structure of the objects from the deblocking and holding each object. Specifically, the data processing unit 114 has a function of constructing the tree structure in which an object corresponding to the mathematical model is taken as a root node and an object pertaining to each component from the deblocked mathematical expression is taken as a leaf node, and associating the objects through a connecting node.

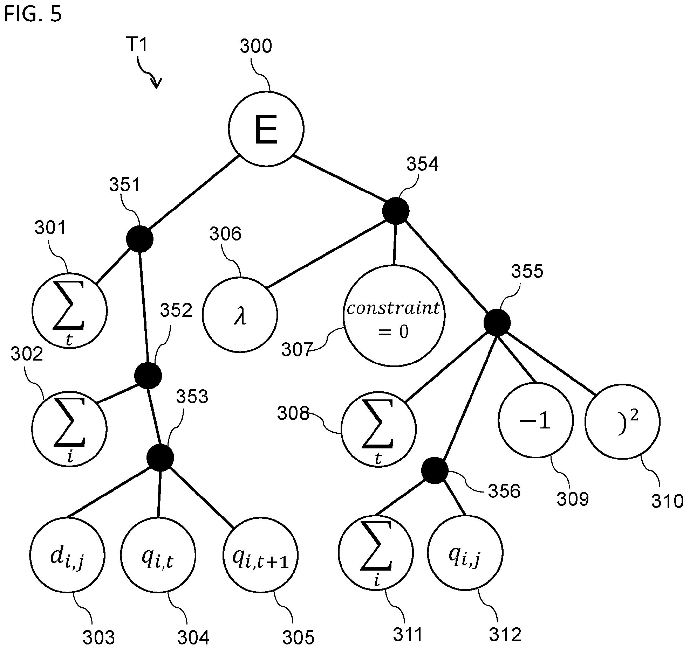

FIG. 5 is a diagram illustrating an example process of constructing a tree structure T1 by the data processing unit 114 according to the present embodiment. As shown in FIG. 5, first, the tree structure T1 includes a root node 300 having information on the cost function E stored therein as an example representing the mathematical model. Note that the root node 300 may also have, for example, information on a mathematical expression defining the mathematical model itself stored therein in addition to the cost function E. More specifically, in addition to the cost function E or instead of the cost function E, the root node may have information on the following mathematical expressions (2) and (3) defining the mathematical model stored therein.

[Expression 2]

$$\min E = E_{cost}(\{x\}) \quad \cdot \cdot \cdot (2)$$

$$\mathrm{s.\,t.}\, f(\{x\}) \leq a \quad \cdot \cdot \cdot (3)$$

Here, $\{x\}$ represents a combination of all variables, $E_{cost}(\{x\})$ represents a cost function in the mathematical model, $f(\{x\})$ represents any function, and a represents any constant. In addition, constraint term s.t. may be constituted by a plurality of constraint expressions.

The root node 300 has two branches stemming therefrom and its slave nodes, connecting nodes 351 and 354 provided. As slave nodes of the connecting node 351, a leaf node 301 to store information on the operator $\Sigma t$ and a connecting node 352 are provided. As slave nodes of the connecting node 352, a leaf node 302 to store information on the operator $\Sigma i$ and a connecting node 353 are provided. As slave nodes of the connecting node 353, leaf nodes 303, 304, and 305 to store information on the literal expression $d_{i,j}$ and the variables $q_{i,t}$ and $q_{i,t+1}$ are provided. Similarly, as slave nodes of the connecting node 354, leaf nodes 306 and 307 to store information on the variable $\lambda$ and a constraint condition (=0) and a connecting node 355 are provided. As slave nodes of the connecting node 355, leaf nodes 308, 309, and 310 to store information on the operator $\Sigma t$, a constant, and an exponent with a parenthesis and a connecting node 356 are provided. As slave nodes of the connecting node 356, leaf nodes 311 and 312 to store information on the operator $\Sigma i$ and the variable $q_{i,t}$ are provided.

The connecting node may store information defining a relationship between master and slave nodes and a relationship between slave nodes sharing this connecting node. For example, a term of the mathematical expression constituted by the leaf nodes and the like subordinate to the connecting node 351 is the cost term, and a term of the mathematical expression constituted by the leaf nodes and the like subordinate to the connecting node 354 is the constraint term. The connecting node 351 may store information specifying a relationship in which the operator $\Sigma t$ pertaining to the leaf node 301 nests components of the mathematical expression that correspond to the nodes subordinate to the connecting node 352. In addition, the connecting node 352 may store information specifying a relationship in which the operator $\Sigma i$ pertaining to the leaf node 302 nests components of the mathematical expression that correspond to the nodes subordinate to the connecting node 353. In addition, the connecting node 353 may store information specifying that components corresponding to the leaf nodes 303, 304, and 305 are to be multiplied by each other. Thus, the connecting node may store information specifying, for example, a relationship between four arithmetic operations and an exponent, a relationship in a nested structure of an operator, and a condition for a term of the mathematical expression that is constituted by nodes subordinate to this connecting node.

Similarly, the connecting node 354 may store information indicating that the variable $\lambda$ pertaining to the leaf node 306 is to be multiplied by the components of the mathematical expression that correspond to the nodes subordinate to the connecting node 355 and that the constraint condition shown in the leaf node 307 is imposed on the constraint term. In addition, the connecting node 355 may store information specifying a relationship in which the operator $\Sigma i$ pertaining to the leaf node 308 nests components of the mathematical expression that correspond to the nodes subordinate to the connecting node 356 and the constant and exponent with a parenthesis pertaining to the leaf nodes 309 and 310. In addition, the connecting node 356 may store information specifying a relationship in which the operator $\Sigma i$ pertaining to the leaf node 311 nests the variable $q_{i,t}$ pertaining to the leaf node 312.

Thus, as shown in the tree structure T1, the objects for the components from the deblocking may be connected via the connecting nodes in accordance with the relationship in the nested structure of the operator, the relationship between the four arithmetic operations and the exponent, or the like. By storing the information on the components in the objects having such a tree structure, an intention expressed by the structure of the mathematical expression into which the mathematical model is formulated can be held as a data structure on an as-is basis.

In addition, as for a literal expression that specifies data representing an indicator as expressed by $d_{i,j}$ (e.g., a parameter corresponding to a distance between cities in the traveling salesman problem) of an optimization target in an optimizing problem, the data set for the indicator specified by the literal expression may be provided in a data structure different from that of the tree structure. That is, although the leaf node 303 is provided for "$d_{i,j}$" as shown in FIG. 5, such a literal expression may be stored as a placeholder in an object. In this case, the data set for the indicator may be stored in another database or the like. Then, after the object is converted into an object program by the conversion unit 115 to be described below, the data set for $d_{i,j}$ may be substituted into an object corresponding to this object program in an appropriate form. In the manner described above, by referring to the placeholder later (that is, performing lazy evaluation) instead of storing the data set directly in $d_{i,j}$ in the tree structure, the processing load according to the size of the data set in the conversion can be made less likely to increase. This enables a stable computation speed in solving an optimization problem via an API, for example, independently of the data size.

In addition, by associating meta information including detailed information such as a relationship between subscripts and a constraint condition as objects with the tree structure (in particular, objects corresponding to a master or its slave nodes sharing a connecting node), it is possible to perform processing with such meta information taken into account when solving an optimization problem in the analysis server 30. Further, for example, by storing the information on the subscript in the object pertaining to the operator or literal expression, it is possible to perform the conversion described below without expanding the operator. This can reduce the computational load in the conversion.

The conversion unit 115 has a function of reading an object of a leaf node defined by a tree structure and converting each object into an object program for a binarized optimization problem, including information about a relation between the object and an object of another leaf node connected via a connecting node. Such an object program can be executed in the analysis server 30. Note that a compiler that realizes the conversion unit 115 may be set as appropriate in accordance with, for example, the type of hardware that realizes the analysis server 30 (e.g., the type of machine or algorithm for optimization, including a quantum annealing machine or a simulated annealing machine). The relation between the object of one leaf node and the object of another leaf node can be defined by information stored in the connecting node shared by both leaf nodes, as described above. Note that the conversion unit 115 may not be provided in the present embodiment.

For example, an operator or the like is abstracted and stored as an object, the relation among objects is defined by a tree structure, and an object pertaining to a data set for an indicator is dealt with as a placeholder to separate from a mathematical model, thereby reducing a load on the conversion of the mathematical model in the conversion unit 115. This can attain a high-speed conversion and reduce the total computation time for the optimization problem.

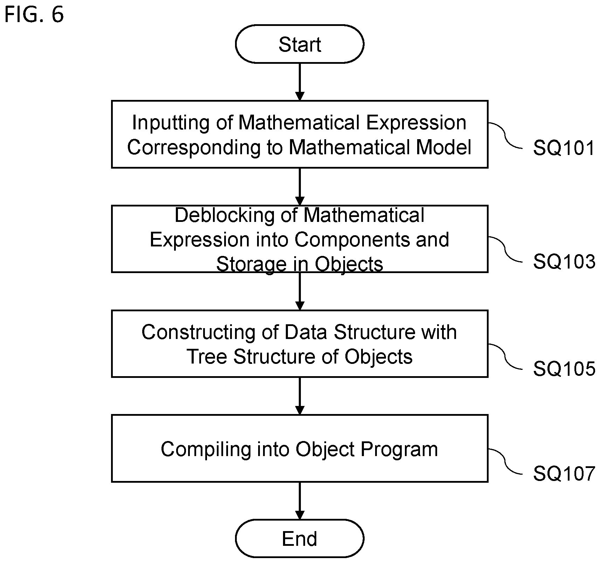

FIG. 6 is a flowchart for a course of control in the system 1 according to the present embodiment. First, the display control unit 111 of the data processing server 10 causes the terminal 20 to display a screen for inputting a mathematical expression representing a mathematical model and allows a user to input the mathematical expression (step SQ101). Next, the mathematical expression acquired by the acquisition unit 112 is deblocked into components, and the object storage unit 113 stores the components in their respective objects (step SQ103). Note that the acquisition of the mathematical expression is not limited to the user's inputting of the mathematical expression as described above, and may be, for example, acquisition of information on the mathematical expression that is stored in advance in the data processing server 10 or the like.

Next, regarding objects, the data processing unit 114 takes an object representing a mathematical model such as a cost function as a root node, takes each component as a leaf node, and constructs a data structure that is a tree structure based on a relationship between the components (step SQ105). Then, the conversion unit 115 performs conversion (compiling) on each of the obtained objects based on the tree structure and generates an object program for solving the binary optimizing problem by the analysis server 30 (step SQ107).

As described above, according to the system 1 of the present embodiment, as a preliminary step before the mathematical model to be solved is subjected, as the binary optimization problem, to analysis by an annealing machine or the like, the mathematical expression corresponding to the mathematical model is deblocked into components, and the data structure due to the tree structure based on the expression of the mathematical expression can be obtained for the object corresponding to each component. In the conversion with such a data structure, the information on the operator or the like is held in an abstracted state; thus, without the need for expanding the operator as in the related art or serializing the mathematical expression, the conversion can be performed stably independently of the size of the mathematical model. That is, it is possible to reduce the load and time for the calculation to solve the optimization problem.

In addition, the data set for the indicator to be optimized in the optimization problem is held as separate data from the above-described data structure, and the object corresponding to the indicator is taken as the placeholder, whereby the data set for the indicator as it is, instead of undergoing conversion, only needs to be substituted into the object program from the conversion. Accordingly, the computational load or the like is determined based on the size of the mathematical model, independently of the data size of the data set for the indicator. Thus, a stable computation time can be attained, independently of the data size of the data set of the indicator.

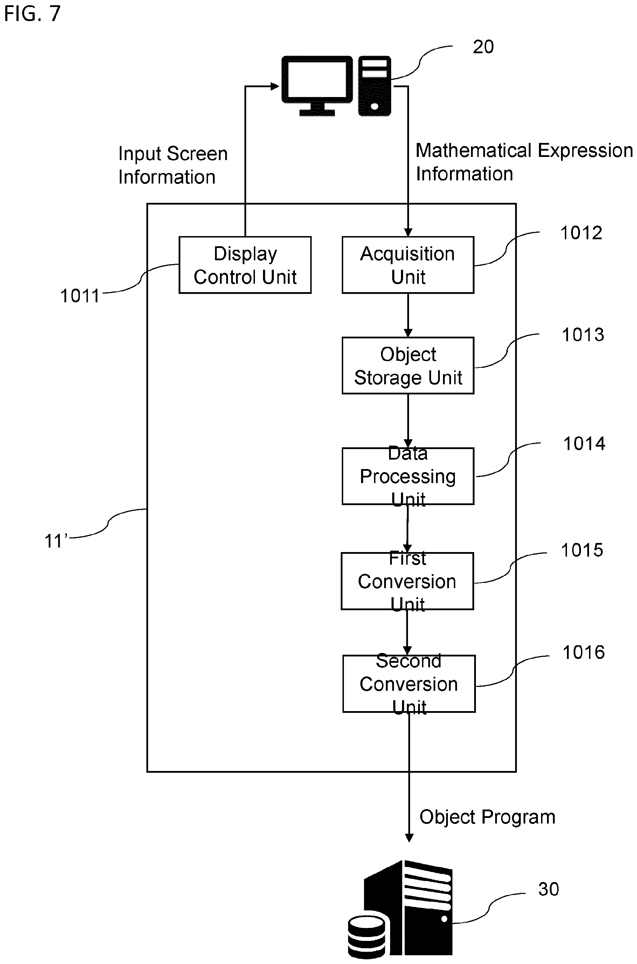

Next, a data processing server 10' according to another embodiment will be described. In the above-described embodiment, when the mathematical expression representing the optimization problem is input and converted into the data structure, a mathematical expression (e.g., QUBO) suitable for solving the optimization problem by a technique such as quantum annealing is used as input information. In the present embodiment, however, a description will be given of a configuration for solving an optimization problem using, as the input information, an expression that is not suitable for solving the optimization problem as it is, such as a mathematical expression representing a constrained optimization problem. FIG. 7 is a diagram illustrating an example software configuration of the data processing server 10' according to another embodiment. A control unit 11' of the data processing server 10' includes a display control unit 1011, an acquisition unit 1012, an object storage unit 1013, a data processing unit 1014, a first conversion unit 1015, and a second conversion unit 1016.

The display control unit 1011 has the same function as that of the display control unit 111 according to the above-described embodiment, and description thereof is thus omitted.

The acquisition unit 1012 has a function of acquiring information on a mathematical expression representing a mathematical model. For example, the acquisition unit 112 according to the present embodiment may acquire information on a mathematical expression that is input to the terminal 20. In the present embodiment, the to-be-acquired mathematical expression representing the mathematical model is not an expression corresponding to a mathematical model suitable for solving a binary optimization problem such as QUBO, PUBO, or HUBO as in the above-described embodiment, but may be assumed to be, for example, a mathematical expression corresponding to a constrained optimization problem obtained by combining a mathematical expression for a constraint condition and a mathematical expression for an objective function. The mathematical expression for the objective function is represented, for example, by a mathematical expression such as $f(x)$. In addition, the mathematical expression for the constraint condition may be represented by a mathematical expression such as $g(x) = 0$. The configuration or the like of each mathematical expression is not particularly limited.

The object storage unit 1013 has a function of deblocking the acquired mathematical expression into components, which constitute the mathematical expression, and storing information on the components from the deblocking in their respective objects. The definitions of the component, operator, and the like are the same as those in the above-described embodiment and thus are omitted.

The object storage unit 1013 deblocks, for example, mathematical expression (4) for the constraint condition shown below into components, and stores each of the components in a single object.

[Expression 3]

$$\sum_i x_i = 1 \qquad \cdot \ \cdot \ \cdot \ (4)$$

For the mathematical expression for the objective function as well, although not shown here, the object storage unit 1013 may deblock the mathematical expression into components and store each of the components in an object.

The data processing unit 1014 has a function of constructing, of the objects from the deblocking, a data structure that is a tree structure to hold each of the objects. The data processing unit 1014 according to the present embodiment may construct a data structure corresponding to the mathematical expression for the constraint condition that is deblocked into the components. The construction of such a data structure and the holding of the objects are the same as those in the above-described embodiment. In addition, the data processing unit 1014 according to the present embodiment may construct a data structure corresponding to the mathematical expression for the objective function.

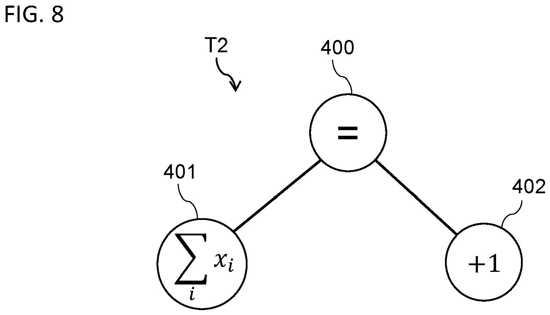

FIG. 8 is a diagram illustrating an example process of constructing a tree structure T2 by the data processing unit 1014 according to the present embodiment. The tree structure T2 shown in FIG. 8 is obtained by deblocking mathematical expression (4) described above into components. A root node 400 stores information on an equal sign, which is an operator. The root node 400 has two branches stemming therefrom and its slave nodes, leaf nodes 401 and 402 provided. The leaf node 401 stores information on the operator $\Sigma x_i$. The leaf node 402 stores information on the constant +1.

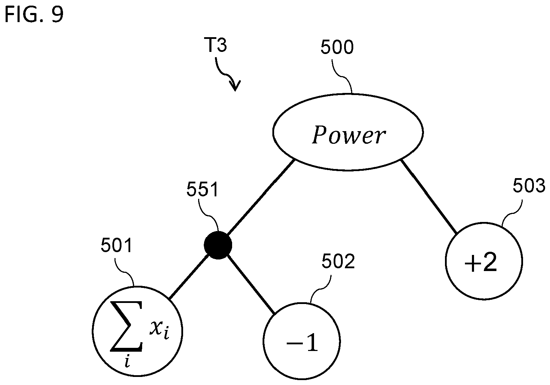

The first conversion unit 1015 has a function of converting (transpiling) a data structure according to a first mathematical expression into a data structure according to a second mathematical expression. Here, the first mathematical expression may be, for example, a mathematical expression corresponding to a constrained optimization problem, and the second mathematical expression may be, for example, a mathematical expression corresponding to a binary optimization problem. For example, it is assumed that mathematical expression (4) above is converted into mathematical expression (5) that is a QUBO representation. FIG. 9 is a diagram illustrating an example process of converting the tree structure T2 into a tree structure T3 by the first conversion unit 1015 according to the present embodiment. The tree structure T3 shown in FIG. 9 is the tree structure T3 corresponding to a QUBO representation when the mathematical expression shown in mathematical expression (4), corresponding to the constrained optimization problem, is converted into the mathematical expression shown in mathematical expression (5), corresponding to the QUBO representation.
[Expression 4]

$$\left( \sum_i x_i - 1 \right)^2 \quad \cdots \quad (5)$$

A root node 500 stores information on a power, which is an operator. The root node 500 has two branches stemming therefrom and its slave nodes, a connecting node 551 and a leaf node 503 provided. The connecting node 551 has two branches stemming therefrom and its slave nodes, leaf nodes 501 and 502 provided.

The leaf node 501 stores information on the operator $\Sigma x_i$. The leaf node 502 stores information on the constant -1. The leaf node 503 stores information on the constant +2. The connecting node 551 may store information specifying that components corresponding to the leaf nodes 501 and 502 are to be coupled together. Note that the function of each node shown in FIGS. 8 and 9 are the same as that in the above-described embodiment.

The first conversion unit 1015 may convert the tree structure T2 as shown in FIG. 8 into the tree structure T3 according to a predetermined rule, table, or the like. Such a predetermined rule or table may be determined based on, for example, a relationship between a mathematical expression corresponding to a constrained optimization problem to be input and a mathematical expression corresponding to a binary optimization problem, or such a rule or table may correspond to a learning model in machine learning.

Note that FIGS. 8 and 9 show an example in which a data structure made from the mathematical expression for the constraint condition shown in the above Expression (4) is converted into a data structure of a QUBO representation pertaining to a binary optimization problem. The first conversion unit 1015 may convert a data structure made from a mathematical expression for an objective function into a data structure of a QUBO representation. In addition, the first conversion unit 1015 may combine the data structure corresponding to the constraint condition and the data structure corresponding to the objective function to construct a data structure corresponding to an optimization problem. Such a data structure may be obtained by converting data structures that are combined prior to the conversion into a data structure corresponding to the QUBO representation by the first conversion unit 1015, or by combining the data structure of the constraint condition and the data structure of the objective function each of which the first conversion unit 1015 has converted into a data structure of the QUBO representation.

The second conversion unit 1016 has a function of reading an object of a leaf node defined by a tree structure and converting each object into an object program for a binarized optimization problem, including information about a relation between the object and an object of another leaf node connected via a connecting node. That is, the second conversion unit 1016 according to the present embodiment corresponds to the conversion unit 115 according to the above-described embodiment.

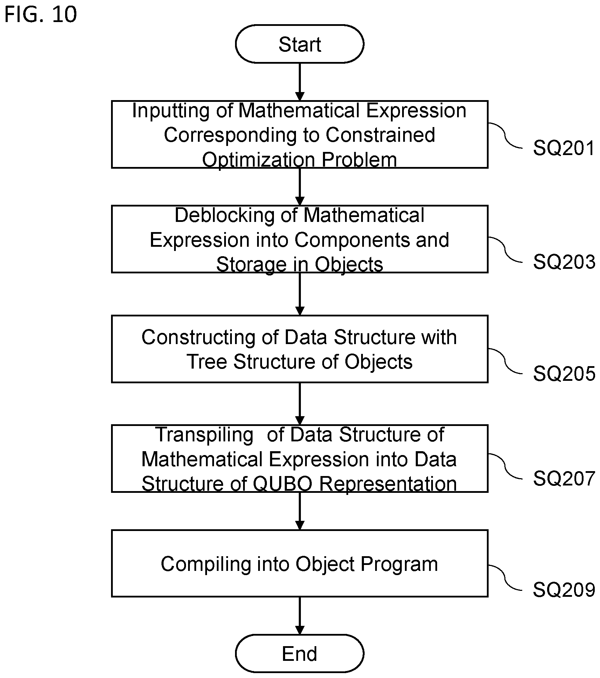

FIG. 10 is a flowchart for a course of control in a system 1' according to the present embodiment. First, the display control unit 1011 of the data processing server 10 causes the terminal 20 to display a screen for inputting a mathematical expression for a constrained optimization problem and allows a user to input the mathematical expression (step SQ201). Next, the mathematical expression acquired by the acquisition unit 1012 is deblocked into components, and the object storage unit 1013 stores the components in their respective objects (step SQ203). Note that the acquisition of the mathematical expression is not limited to the user's inputting of the mathematical expression as described above, and may be, for example, acquisition of information on the mathematical expression that is stored in advance in the data processing server 10' or the like.

Next, regarding objects, the data processing unit 1014 takes, as a root node, an object representing a mathematical model such as a mathematical expression for a constraint condition or a mathematical expression for an objective function, takes each component as a leaf node, and constructs a data structure that is a tree structure based on a relationship between the components (step SQ205). Next, the first conversion unit 1015 performs conversion (transpiling) for converting the constructed data structure into a data structure corresponding to a mathematical expression for solving a binary optimization problem (step S207). Then, the second conversion unit 1016 performs conversion (compiling) on each of the obtained objects based on the tree structure and generates an object program for solving the binary optimizing problem in the analysis server 30 (step SQ209).

As described above, according to the system 1' of the present embodiment, only by inputting a mathematical expression pertaining to a typical optimization problem, the mathematical expression is automatically converted into a data structure for solving a binary optimization problem and can be subjected to analysis by an annealing machine or the like. Thus, even a user who is unfamiliar with a mathematical model necessary for solving the binary optimization problem can solve the optimization problem more easily only by inputting the mathematical expression for the optimization problem. Further, since the conversion into representation necessary to solve the optimization problem is performed with the data structure maintained, it is possible to reduce the load and time for the calculation to solve the optimization problem.

Although preferable embodiments of the present disclosure have been described above in detail with reference to the accompanying drawings, the technical scope of the present disclosure is not limited to these examples. It is apparent that a person having ordinary knowledge in the technical field of the present disclosure can conceive various changes or modifications within the scope of the technical idea recited in the claims, and it is understood that such changes or modifications should also belong to the technical scope of the present disclosure.

The apparatus described in the present specification may be realized as a single apparatus or may be realized by a plurality of apparatuses (e.g., a cloud server) or the like some or all of which are connected via a network. For example, the control unit 11 and the storage 13 of the data processing server 10 may be realized by different servers that are connected to each other via a network. In addition, all or some of the functions of the data processing server 10 may be displayed by the terminal 20.

The procedure by the apparatus described in the present specification may be realized using any of software, hardware, and a combination of software and hardware. It is possible to create a computer program for realizing each function of the data processing server 10 according to the present embodiment and implement the computer program on a PC or the like. In addition, it is also possible to provide a computer-readable recording medium storing such a computer program. The recording medium is, for example, a magnetic disk, an optical disk, a magneto-optical disk, or a flash memory. In addition, the above computer program may be distributed, for example, via a network without using a recording medium.

The processing described with reference to the flowcharts in the present specification may not necessarily be executed in the order as illustrated. Some of the processing steps may be executed in parallel. Also, an additional processing step may be employed, or some of the processing steps may be omitted.

Further, the effect described in the present specification is merely an illustrative or exemplary one, which is not restrictive. That is, the technique according to the present disclosure can achieve another effect that is obvious to those skilled in the art from the description of the present specification, either together with or in place of the above-described effect.

Note that the following configurations also fall within the technical scope of the present disclosure.

(Item 1)

A method for converting a mathematical optimization problem into an object program for a mathematical programming problem, the method comprising causing a processor to:

acquire information on a mathematical expression representing a mathematical model corresponding to the mathematical optimization problem;

deblock the mathematical expression into components and store information on each component in an object, the components constituting the mathematical expression; and

for the components of the mathematical expression, associate objects with each other through a connecting node as a data structure that is a tree structure in which an object corresponding to the mathematical model is taken as a root node and an object pertaining to each component from the deblocked mathematical expression is taken as a leaf node.

(Item 2)

The method according to Item 1, wherein the object of the leaf node constituting the tree structure includes meta information about the component.

(Item 3)

The method according to Item 2, wherein the meta information is associated with a component of the mathematical expression that is stored in at least one object sharing the connecting node.

(Item 4)

The method according to Item 3, wherein an object of a leaf node that is subordinate to the connecting node includes a component constituting a term pertaining to a constraint condition in the mathematical expression, and the meta information includes information about the constraint condition.

(Item 5)

The method according to Item 4, wherein the constraint condition includes at least either of a condition pertaining to an equality constraint and a condition pertaining to an inequality constraint.

(Item 6)

The method according to any one of Items 2 to 5, wherein a component of the mathematical expression includes at least either of an operator and a literal expression, and the meta information includes information about subscripts appended to at least either of the operator and the literal expression, respectively.

(Item 7)

The method according to any one of Items 1 to 6, wherein a component of the mathematical expression includes a literal expression that defines data representing an indicator of an optimization target in the mathematical optimization problem, and a set of the data on the indicator that is defined by the literal expression is provided in a data structure that is different from the tree structure in which information on the literal expression is stored in a leaf.

(Item 8)

The method according to any one of Items 1 to 7, wherein the mathematical programming problem includes a binary optimization problem.

(Item 9)

The method according to Item 8, wherein the binary optimization problem includes at least any one of a QUBO (unconstrained quadratic binary optimization problem), a PUBO (polynomial unconstrained binary optimization problem), a HUBO (high-order unconstrained binary optimization problem), and a constrained binary optimization problem.

(Item 10)

The method according to any one of Items 1 to 9, wherein the data structure is a data structure to be subjected to processing for solving the mathematical optimization problem in at least any one of a simulated annealing machine, a quantum annealing machine, and a quantum gate computer.

(Item 11)

The method according to any one of Items 1 to 10, wherein an object corresponding to the mathematical model to be stored in the root node includes an object related to a mathematical expression representing the mathematical model or an object related to a cost function corresponding to the mathematical model.

(Item 12)

The method according to any one of Items 1 to 11, wherein the acquired mathematical expression representing the mathematical model corresponding to the mathematical optimization problem includes a mathematical expression corresponding to a constrained optimization problem, and the method further comprises converting the data structure into a data structure corresponding to a binary optimization problem.

(Item 13)

A data structure to be subjected to processing for converting a mathematical optimization problem into an object program for a mathematical programming problem by a computer, wherein information on each of components from deblocking of a mathematical expression representing a mathematical model corresponding to the mathematical optimization problem is stored in an object, and objects are associated with each other through a connecting node as a tree structure in which an object corresponding to the mathematical model is taken as a root node and an object pertaining to each component from the deblocked mathematical expression is taken as a leaf node.

(Item 14)

A program for subjecting a computer to processing for converting a mathematical optimization problem into an object program for a mathematical programming problem, the program being configured to cause the computer to function as:

an acquisition unit that acquires information on a mathematical expression representing a mathematical model corresponding to the mathematical optimization problem;
an object storage unit that deblocks the mathematical expression into components and stores information on each component in an object, the components constituting the mathematical expression; and
a data processing unit that associates, for the components of the mathematical expression, objects with each other through a connecting node as a data structure that is a tree structure in which an object corresponding to the mathematical model is taken as a root node and an object pertaining to each component from the deblocked mathematical expression is taken as a leaf node.

REFERENCE SIGNS LIST

1: System
10: Data Processing Server
20: Terminal
30: Analysis Server
111: Display Control Unit
112: Acquisition Unit
113: Object Storage Unit
114: Data Processing Unit
115: Conversion Unit

**Claims**

1. A method for converting a mathematical optimization problem into an object program for a mathematical programming problem, the method comprising causing a processor to:

acquire information on a mathematical expression representing a mathematical model corresponding to the mathematical optimization problem;

deblock the mathematical expression into components and store information on each component in an object, the components constituting the mathematical expression; and

for the components of the mathematical expression, associate objects with each other through a connecting node as a data structure that is a tree structure in which an object corresponding to the mathematical model is taken as a root node and an object pertaining to each component from the deblocked mathematical expression is taken as a leaf node.

2. The method according to claim 1, wherein the object of the leaf node constituting the tree structure includes meta information about the component.

3. The method according to claim 2, wherein the meta information is associated with a component of the mathematical expression that is stored in at least one object sharing the connecting node.

4. The method according to claim 3, wherein an object of a leaf node that is subordinate to the connecting node includes a component constituting a term pertaining to a constraint condition in the mathematical expression, and the meta information includes information about the constraint condition.

5. The method according to claim 4, wherein the constraint condition includes at least either of a condition pertaining to an equality constraint and a condition pertaining to an inequality constraint.

6. The method according to any one of claims 2 to 5, wherein a component of the mathematical expression includes at least either of an operator and a literal expression, and the meta information includes information about subscripts appended to at least either of the operator and the literal expression, respectively.

7. The method according to any one of claims 1 to 6, wherein a component of the mathematical expression includes a literal expression that defines data representing an indicator of an optimization target in the mathematical optimization problem, and a set of the data on the indicator that is defined by the literal expression is provided in a data structure that is different from the tree structure in which information on the literal expression is stored in a leaf.

8. The method according to any one of claims 1 to 7, wherein the mathematical programming problem includes a binary optimization problem.

9. The method according to claim 8, wherein the binary optimization problem includes at least any one of a QUBO (unconstrained quadratic binary optimization problem), a PUBO (polynomial unconstrained binary optimization problem), a HUBO (high-order unconstrained binary optimization problem), and a constrained binary optimization problem.

10. The method according to any one of claims 1 to 9, wherein the data structure is a data structure to be subjected to processing for solving the mathematical optimization problem in at least any one of a simulated annealing machine, a quantum annealing machine, and a quantum gate computer.

11. The method according to any one of claims 1 to 10, wherein the object corresponding to the mathematical model to be stored in the root node includes an object related to a mathematical expression representing the mathematical model or an object related to a cost function corresponding to the mathematical model.

12. The method according to any one of claims 1 to 11, wherein the acquired mathematical expression representing the mathematical model corresponding to the mathematical optimization problem includes a mathematical expression corresponding to a constrained optimization problem, and the method further comprises converting the data structure into a data structure corresponding to a binary optimization problem.

13. A data structure to be subjected to processing for converting a mathematical optimization problem into an object program for a mathematical programming problem by a computer, wherein information on each of components from deblocking of a mathematical expression representing a mathematical model corresponding to the mathematical optimization problem is stored in an object, and objects are associated with each other through a connecting node as a tree structure in which an object corresponding to the mathematical model is taken as a root node and an object pertaining to each component from the deblocked mathematical expression is taken as a leaf node.

**14.** A program for subjecting a computer to processing for converting a mathematical optimization problem into an object program for a mathematical programming problem, the program being configured to cause the computer to function as:

an acquisition unit that acquires information on a mathematical expression representing a mathematical model corresponding to the mathematical optimization problem;

an object storage unit that deblocks the mathematical expression into components and stores information on each component in an object, the components constituting the mathematical expression; and

a data processing unit that associates, for the components of the mathematical expression, objects with each other through a connecting node as a data structure that is a tree structure in which an object corresponding to the mathematical model is taken as a root node and an object pertaining to each component from the deblocked mathematical expression is taken as a leaf node.

FIG. 1

<u>1</u>

20

10

30

FIG. 2

FIG. 3

FIG. 4

$$E = \underbrace{\sum_{t} \underbrace{\sum_{i,j} \underbrace{d_{i,j} q_{i,t} q_{i,t+1}}_{204}}_{203}}_{202} + \underbrace{\lambda \underbrace{\sum_{t} \left( \underbrace{\sum_{i} q_{i,t}}_{207} - 1 \right)^2}_{206}}_{205}$$

$$\underbrace{\phantom{\sum_{t} \sum_{i,j} d_{i,j} q_{i,t} q_{i,t+1}}}_{Cost} \qquad \underbrace{\phantom{\lambda \sum_{t} \left( \sum_{i} q_{i,t} - 1 \right)^2}}_{Constraint(=0)}$$

201 202 203 204 205 206 207 208

FIG. 5

FIG. 6

```
            ┌──────────────┐
            │    Start     │
            └──────────────┘
                   │
                   ▼
┌─────────────────────────────────────┐
│  Inputting of Mathematical Expression│ ╮
│ Corresponding to Mathematical Model  │ ╰─ SQ101
└─────────────────────────────────────┘
                   │
                   ▼
┌─────────────────────────────────────┐
│     Deblocking of Mathematical       │
│   Expression into Components and     │ ╮
│        Storage in Objects            │ ╰─ SQ103
└─────────────────────────────────────┘
                   │
                   ▼
┌─────────────────────────────────────┐
│  Constructing of Data Structure with │ ╮
│       Tree Structure of Objects      │ ╰─ SQ105
└─────────────────────────────────────┘
                   │
                   ▼
┌─────────────────────────────────────┐
│     Compiling into Object Program    │ ╮
│                                      │ ╰─ SQ107
└─────────────────────────────────────┘
                   │
                   ▼
            ┌──────────────┐
            │     End      │
            └──────────────┘
```

FIG. 7

Input Screen Information

Mathematical Expression Information

Display Control Unit — 1011

Acquisition Unit — 1012

Object Storage Unit — 1013

Data Processing Unit — 1014

First Conversion Unit — 1015

Second Conversion Unit — 1016

11'

20

Object Program

30

FIG. 8

T2

400

$$\sum_i x_i = +1$$

401

402

FIG. 9

T3

500 *Power*

551

501 $\sum_i x_i$

502 $-1$

503 $+2$

FIG. 10

Start

↓

Inputting of Mathematical Expression Corresponding to Constrained Optimization Problem — SQ201

↓

Deblocking of Mathematical Expression into Components and Storage in Objects — SQ203

↓

Constructing of Data Structure with Tree Structure of Objects — SQ205

↓

Transpiling of Data Structure of Mathematical Expression into Data Structure of QUBO Representation — SQ207

↓

Compiling into Object Program — SQ209

↓

End

## INTERNATIONAL SEARCH REPORT

International application No.

PCT/JP2021/013273

### A. CLASSIFICATION OF SUBJECT MATTER
Int. Cl. G06N99/00(2019.01)i
FI: G06N99/00 180

According to International Patent Classification (IPC) or to both national classification and IPC

### B. FIELDS SEARCHED

Minimum documentation searched (classification system followed by classification symbols)
Int. Cl. G06N3/00-99/00

Documentation searched other than minimum documentation to the extent that such documents are included in the fields searched
Published examined utility model applications of Japan   1922-1996
Published unexamined utility model applications of Japan   1971-2021
Registered utility model specifications of Japan   1996-2021
Published registered utility model applications of Japan   1994-2021

Electronic data base consulted during the international search (name of data base and, where practicable, search terms used)
IEEE Xplore

### C. DOCUMENTS CONSIDERED TO BE RELEVANT

| Category* | Citation of document, with indication, where appropriate, of the relevant passages | Relevant to claim No. |
|---|---|---|
| A | TANAHASHI, Kotaro et al. Application of Ising Machines and a Software Development for Icing Machines, In: Journal of the Physical Society of Japan, vol. 88, no. 6, 20 May 2019, Article number: 061010, pp. 1-10, ISSN: 1347-4073, <DOI: 10.7566/JPSJ.88.061010>. abstract; page 7, left-hand column, lines 44-54; page 7, right-hand column, lines 6-10; page 7, right-hand column, line 20 to page 8, left-hand column, line 3; page 8, left-hand column, line 17 to page 8, right-hand column, line 14; fig. 3; table II | 1-14 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27.05.2021 | 08.06.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019513276 W